# EUROPÄISCHE PATENTSCHRIFT

(11) **EP 2 105 052 B1**
(45) Veröffentlichungstag und Bekanntmachung des Hinweises auf die Patenterteilung: **06.12.2017**
(21) Anmeldenummer: 09003088.3
(22) Anmeldetag: 04.03.2009
(51) Int. Cl.: A21C 7/01, A21C 7/00, A21C 9/04

(54) **Vorrichtung und Verfahren zum Wirken von Teiglingen**
Apparatus and method for working dough pieces
Dispositif et procédé pour le pétrissage de portions de pâte

(30) Priorität: 27.03.2008 DE 102008016246
(43) Veröffentlichungstag der Anmeldung: 30.09.2009
(73) Patentinhaber: Fortuna Maschinenbau Holding AG, 96231 Bad Staffelstein (DE)
(72) Erfinder: Moritz, Alexander, 96250 Ebensfeld (DE)
(74) Vertreter: Schröer, Gernot H.

(56) Entgegenhaltungen:
- DE-A1- 2 122 969
- DE-A1-102006 018 626
- DE-U1- 9 111 211

## Beschreibung

Die Erfindung betrifft eine Vorrichtung zum Wirken von Teiglingen mit einer Wirkkammertrommel umfassend radial zugängliche Wirkkammern, in welchen die Teiglinge gewirkt werden können, mit einem Wirkband zum radialen Verschließen der Wirkkammern und mit einer Einrichtung zum Zuführen von Trennmitteln, mittels welchen ein kritisches Anhaften der Teiglinge verhindert werden kann. Darüber hinaus betrifft die Erfindung ein Verfahren zum Wirken von Teiglingen, bei welchem ein Teigling in eine Wirkkammer einer Wirkkammertrommel eingelegt wird, und bei welchem mittels Trennmittel eine Anhaftgefahr des Teiglings verringert werden kann.

Gattungsgemäße Wirkvorrichtungen sind aus dem Stand der Technik bereits gut bekannt, beispielsweise um vorportionierte Teigrohlinge für eine Endbearbeitung in eine gewünschte Form bringen zu können. Zum Beispiel kann eine derartige Wirkvorrichtung in Bäckereien zum Einsatz kommen, um Teigrohlinge in etwa rund beziehungsweise oval zu formen. Typischerweise können mit derartigen Wirkvorrichtungen 10.000 bis 20.000 Teigrohlinge pro Stunde entsprechend geformt werden. Die Teigrohlinge werden hierbei zuvor aus einer Teigrohmasse in geeignet große Teigrohlinge getrennt. Anschließend werden sie der Wirkvorrichtung zugeführt.

Aus der Offenlegungsschrift DE 103 06 437 A1 ist beispielsweise eine Teigbearbeitungsanlage bekannt, mittels welcher eine Teigmasse durch einen Zuführtrichter einer Teigportioniereinrichtung zugeführt wird, wobei die Teigportioniereinrichtung den ihr zugeführten Teig in einzelne Teigstücke von gewünschter Größe und Masse portioniert. Diese einzelnen Teigstücke gelangen weiter auf ein Übergabetransportband und werden hiermit einer Teigwirkvorrichtung zu geführt. Mittels der Teigwirkvorrichtung können die einzelnen Teigstücke zur Endbearbeitung in eine gewünschte Form gebracht werden. Hierzu weist die Teigwirkvorrichtung eine äußere Wirktrommel und eine innere Wirktrommel auf, die zueinander gegenläufig um eine gemeinsame Rotationsachse rotieren, so dass die Teigstücke baulich besonders einfach gewirkt werden können. Hierbei bildet die äußere Wirktrommel einzelne Wirkkammern aus, die über Zugangsöffnungen radial zugänglich sind. Die innere Wirktrommel bildet hierbei einen Wirkkammerboden der einzelnen Wirkkammern aus. Die radialen Zugangsöffnungen der Wirkkammern können temporär durch ein Wirkband verschlossen werden, welches die äußere Wirktrommel teilweise umschlingt.

Eine Teigbearbeitungsmaschine mit einer ähnlich aufgebauten Teigwirkvorrichtung ist in der Offenlegungsschrift DE 10 2006 018 626 A1, welches als nächstliegender Stand der Technik zu betrachten ist, beschrieben Insbesondere wird hier einer Wirkkammertrommel der Teigwirkvorrichtung ein Trennmittel, mit welchem ein unerwünschtes Anhaften der Teigstücke an Bauteile der Teigwirkvorrichtung verhindert werden kann, mittels eines Wirkbandes permanent zugeführt. Hierzu ist oberhalb des Wirkbandes eine Bemehlungsstation angeordnet, mittels welcher das Trennmittel in Gestalt von Mehl permanent auf die Oberseite des Wirkbandes gestreut wird. Da das Wirkband bereichsweise mit der Wirktrommel in Kontakt kommt, gelangt die bemehlte Seite des Wirkbandes nach Überlaufen einiger Umlenkrollen mit der Außenfläche der Wirkkammertrommel in Kontakt. Hierdurch gelangt das Mehl auch in Wirkkammern der Wirkkammertrommel und auch an Teigstücke, welche sich innerhalb der Wirkkammern befinden. Durch das permanente Zuführen des Mehls kann vorteilhafter Weise die Gefahr reduziert werden, dass die Teigstücke, insbesondere bei sehr feuchtem und klebrigem Teig, an Bauteile der Wirkkammertrommel kleben und hierbei schlecht in Form gebracht werden können. Jedoch bedingt das permanente Zuführen des Mehls als Trennmittel einen relativ hohen Mehlverbrauch. Darüber hinaus werden auch Bereiche der Wirkkammertrommel mit Trennmittel beziehungsweise Mehl kontaminiert, an denen das Mehl keine Vorteile bringt, aber diese Bereiche nachteilig verschmutzt.

Vorrichtungen zur Zuführung von Öl oder Fett in Wirkkammern von Teigwirkvorrichtungen sind beispielsweise aus der DE 2 122 969 A1 und der DE 91 11 211 U1 bekannt.

Es ist Aufgabe vorliegender Erfindung, gattungsgemäße Teigwirkvorrichtungen weiter zu entwickeln, so dass insbesondere die vorstehend genannten Nachteile vermieden werden.

Die Aufgabe der Erfindung wird von einer Vorrichtung zum Wirken von Teiglingen mit einer Wirkkammertrommel umfassend radial zugängliche Wirkkammern, in welchen die Teiglinge gewirkt werden können, mit einem Wirkband zum radialen Verschließen der Wirkkammern und mit einer Einrichtung zum Zuführen von Mehl als Trennmittel, mittels welchem ein kritisches Anhaften der Teiglinge verhindert werden kann, gelöst, wobei sich die Vorrichtung zum Wirken von Teiglingen durch eine Batch-Zuführeinrichtung für Trennmittel auszeichnet, welche eine berührungslose Zuführeinrichtung für das Trennmittel umfasst, wobei die Zuführeinrichtung Mittel zum Einwerfen des Trennmittels in die Wirkkammern aufweist.

Vorteilhafter Weise kann mittels der Batch-Zuführeinrichtung das Trennmittel die Gefahr signifikant verringert werden, dass Bereichen der Wirkvorrichtung, insbesondere Bereichen der Wirkkammertrommel, Trennmittel zugeführt werden, an welchen das Trennmittel keinen Nutzen hinsichtlich des Wirkens der Teiglinge bringt.

Dies wird vorliegend im Wesentlichen dadurch erzielt, dass die Zuführeinrichtung der Wirkkammertrommel das Trennmittel batchweise zuführt. So kann das Trennmittel gezielt an die Wirkkammertrommel positioniert werden, insbesondere gezielt in Wirkkammern der Wirkkammertrommel eingebracht werden.

Somit werden insbesondere Bereiche der Wirkkammertrommel, welche nicht mit dem Trennmittel beaufschlagt werden sollen, vorteilhafter Weise auch nicht oder nur vernachlässigbar gering Trennmittel kontaminiert. Zudem kann der Verbrauch an Trennmittel durch ein batchweises Zuführen stark verringert werden.

Mit dem Begriff "Batch-Zuführeinrichtung", nachstehend auch kurz Zuführeinrichtung genannt, wird jegliche Einrichtung verstanden, mittels welcher einer Wirkkammertrommel Trennmittel batchweise zugeführt werden können, so dass das Trennmittel vorzugsweise im Wesentlichen lediglich in an der Wirkkammertrommel vorgesehene Wirkkammern gelangen. Hierdurch unterscheidet sich die vorliegende Wirkvorrichtung für Teiglinge von herkömmlichen gattungsgemäßen Vorrichtungen, bei welchen Mehl als Trennmittel kontinuierlich bereitgestellt und einer Wirkkammertrommel permanent zugeführt wird.

Der Begriff "Vorrichtung zum Wirken", nachstehend auch kurz Wirkvorrichtung genannt, beschreibt jegliche Vorrichtungen, mittels welchen Teiglinge insbesondere für eine Endbearbeitung, wie beispielsweise für einen Backvorgang, in eine gewünschte Form gebracht werden können. Hierzu werden die Teiglinge in geeigneter Weise solange gewirkt bzw. gewalkt, bis sie die gewünscht Form aufweisen.

Als "Teiglinge" werden im Zusammenhang mit vorliegender Erfindung jegliche Teigstücke beschrieben, welche aus einer Teigmasse heraus im Wesentlichen vorportioniert wurden, und welche anschließend zum Fertigstellen einer Backware in eine gewünschte Form gebracht werden müssen. Beispielsweise hinsichtlich Brötchen können solche Teiglingsformen rund, oval, aber auch quadratisch oder rechteckig sein.

Der Begriff "Wirkkammertrommel" beschreibt vorliegend jegliche Einrichtungen, mittels welcher Wirkkammern zur Verfügung gestellt werden können, in welchen die vorliegenden Teiglinge gewirkt beziehungsweise gewalkt werden oder sonst wie in eine gewünschte Form gebracht werden können. Vorzugsweise besteht die Wirkkammertrommel aus einer inneren Wirktrommel und einer hierzu gleichläufig rotierenden äußeren Wirktrommel. Die innere Wirktrommel kann hierbei baulich besonders einfach die Wirkkammerböden der einzelnen Wirkkammern bilden, wo hingegen die äußere Wirktrommel die jeweiligen Seitenwände der Wirkkammern bereit stellen kann, mittels welchen ein seitliches Ausbrechen der Teiglingen während des Wirkens verhindert werden kann. Um die Teiglinge besonders gut wirken zu können, kann insbesondere die innere Wirktrommel eine rauere Mantelfläche aufweisen und zusätzlich zu der Rotationsbewegung radial und axial zur Rotationsachse oszillieren.

Die einzelnen Wirkkammern sind über radiale Zugangsöffnungen radial zugänglich, wobei die Zugangsöffnungen verschieden ausgebildete Querschnittsgestalten aufweisen können. Beispielsweise sind die Querschnitte der Zugangsöffnungen rund, haben eine polygonale oder insbesondere sechseckige Wabenform, oder weisen eine elliptische oder andersartige Gestalt auf.

Als Wirkband kommt vorliegend jegliches Gebilde in Betracht, welches die Wirkkammertrommel zumindest teilweise umschlingen kann, so dass die radialen Zugangsöffnungen der Wirkkammern verschlossen werden können. Das Wirkband kann um die Wirkkammertrommel beispielsweise um 90° herum gelenkt sein. Auch kann das Wirkband mittels geeigneter Spannmittel in seiner Spannkraft reguliert werden.

Der Begriff "Trennmittel" erfasst das Trennmittel Mehl, mittels welchem gewährleistet werden kann, dass selbst sehr weiche, klebrige und/oder feuchte Teiglinge nicht unvorteilhaft an Komponenten der Wirkkammertrommel, wie beispielsweise an dem Wirkkammerboden oder der Wirkkammerwand, kleben und hierbei die Gestalt der Teiglinge schlimmstenfalls zerstört wird.

Die Aufgabe der Erfindung wird vorliegend auch von einem Wirkverfahren von Teiglingen gelöst, bei welchem ein Teigling in eine Wirkkammer einer Wirkkammertrommel eingelegt wird, und bei welchem mittels Mehl als Trennmittel eine Anhaftgefahr des Teiglings verringert werden kann, wobei sich das Wirkverfahren dadurch auszeichnet, dass das Trennmittel der Wirkkammertrommel durch eine berührungslose Zuführeinrichtung für das Trennmittel mit Mitteln zum Einwerfen des Trennmittels in die Wirkkammern diskontinuierlich zugeführt wird.

Insbesondere mittels eines derartigen diskontinuierlichen Zuführens des Trennmittels kann erreicht werden, dass das Trennmittel gezielt in die jeweilige Wirkkammer der Wirkkammertrommel eingebracht wird, so dass umliegende Bereiche, insbesondere der Wirkkammertrommel, nicht wesentlich von dem Trennmittel kontaminiert werden. Insbesondere kann ein derartiges diskontinuierliches Zuführen des Trennmittels mit der vorstehend beschriebenen vorteilhaften Batch-Zuführeinrichtung baulich besonders einfach durchgeführt werden.

Wird vor einem Einlegen und/oder während eines Einlegens des Teiglings einer Wirkkammer das Trennmittel zugeführt, kann die Gefahr verringert werden, dass der Teigling beim Auf- bzw. Anprallen auf den Wirkkammerboden beziehungsweise auf die Wirkkammerseitenwände nachhaltig an diesen anhaften bleibt und hierdurch nicht oder nur unvollständig in Form gebracht werden kann.

In diesem Zusammenhang ist es weiter vorteilhaft, wenn das Trennmittel in eine leere Wirkkammer eingebracht werden. Hierbei kann das Trennmittel besonders gut an den Wirkkammerboden beziehungsweise an Wirkkammerseitenwände der Wirkkammertrommel gelangen, so dass betriebssicher gewährleistet werden kann, dass der Teigling, welcher anschließend in eine Wirkkammer eingelegt wird, möglichst in ein Trennmittelbett eingelegt wird.

Verfahrenstechnisch kann ein derart gezieltes Zuführen bzw. Einbringen von Trennmittel besonders einfach gewährleistet werden, wenn das Trennmittel in die Wirkkammer eingebracht wird, nachdem die Wirkkammer den unteren Scheitelbereich der Wirkkammertrommel passiert hat und bevor die Wirkkammer den oberen Scheitelbereich der Wirkkammertrommel erreicht.

Wird das Trennmittel berührungslos in die Wirkkammer eingebracht, ist die Gefahr weiter verringert, dass umliegende Bereiche der Wirkkammertrommel unnötig mit Trennmittel beaufschlagt werden. Hierdurch können insbesondere Reinigungsarbeiten eingespart bzw. Reinigungsintervalle verlängert werden, so dass mit einer entsprechend aufgebauten Wirkvorrichtung wesentlich effektiver gearbeitet werden kann.

Eine bevorzugte Verfahrensvariante sieht zudem noch vor, dass der Teigling mittels der Wirkkammertrommel mit dem Trennmittel beaufschlagt wird. Auch hierdurch kann zusätzlich gewährleistet werden, dass das Trennmittel im Wesentlichen nur in diejenigen Bereiche der Wirktrommel gelangt, in oder an welchen das Trennmittel benötigt wird.

Um das Trennmittel, wie vorstehend beschrieben, berührungslos insbesondere in die Wirkkammer einbringen zu können, weist die vorliegende Wirkvorrichtung eine berührungslose Zuführeinrichtung für Trennmittel auf. Insbesondere wenn die vorliegende Batch-Zuführeinrichtung die Wirkkammertrommel nicht berührt, kann besonders betriebssicher dafür gesorgt werden, dass das Trennmittel vorteilhafter Weise auch nur der jeweiligen Wirkkammer zugeführt wird.

Die vorliegende berührungslose Zuführeinrichtung kann auf vielfältige Weise gestaltet sein, solange sie die Wirkkammertrommel zum Zuführen des Trennmittels konstruktiv nicht berühren muss. Ein Berühren der Wirkkammertrommel beispielsweise durch einen Trennmittelabstreifer oder sonstigen Trennmittelrückhalteeinrichtungen, welche der berührungslosen Zuführeinrichtung zugeordnet werden können, sind hiervon ausgeschlossen. Insbesondere unterscheidet sich die vorliegende Zuführeinrichtung immer von einem Band beziehungsweise einem Wirkband, welches die Wirkkammertrommel umschlingen kann.

Die Zuführeinrichtung weist Mittel zum Einwerfen von Trennmittel in die Wirkkammern auf. Vorteilhafter Weise gelingt es mittels dieser Einwerfmittel besonders gut, die Trennmittel gezielt in die Wirkkammern einzubringen, so dass umliegende Bereiche der Wirkkammertrommel möglichst nicht mit dem Trennmittel kontaminiert werden.

Es versteht sich, dass auch diese Einwerfmittel vielfältiger Gestalt sein können. Baulich besonders einfach und daher sehr robust und resistent gegenüber den rauen Einsatzbedingungen an der Wirkvorrichtung lassen sich die Einwerfmittel gestalten, wenn die Mittel zum Einwerfen von Trennmittel einen umlaufenden Trennmittelzuführtrum aufweisen. Insbesondere kann ein Ende einer Zuführeinrichtung, an welchem ein umlaufender Trennmittelzuführtrum umgelenkt wird, besonders nahe und Bauraum sparend bis an eine Wirkkammer einer Wirkkammertrommel, insbesondere bis kurz vor einer radialen Zugangsöffnung einer Wirkkammer, angeordnet werden, so dass das Trennmittel vorzugsweise nur dann in Richtung der Wirkkammertrommel gezielt zugeführt wird, wenn eine Wirkkammer das Ende des umlaufenden Trennmittelzuführtrums passiert. Hierdurch ist baulich einfach gewährleistet, dass das Trennmittel gezielt in die Wirkkammern eingebracht werden können, so dass diese vorzugsweise lediglich den Wirkkammerboden beziehungsweise die Wirkkammerseitenwände benetzen können.

Baulich besonders einfach kann dies realisiert werden, wenn die Zuführeinrichtung bezüglich einer Teiglingtransportumfangsrichtung vor einem Wirkbandbereich der Wirkkammertrommel angeordnet ist. Durch ein solches Anordnen ist sicher gestellt, dass in einer Wirkkammer bereits Trennmittel eingebracht werden beziehungsweise an einem Teigling bereits Trennmittel vorhanden sein kann, bevor ein Wirkband mit der Wirkkammertrommel in Berührung kommt.

Der Begriff "Teiglingtransportumfangsrichtung" beschreibt hierbei die Transportrichtung, in welche die Teiglinge insbesondere mit der äußeren Wirktrommel der Wirkkammertrommel rotieren.

Mit dem Begriff "Wirkbandbereich" wird im Wesentlichen der Umschlingungsbereich des Wirkbandes an der Wirkkammertrommel beschrieben.

Ist zudem die Zuführeinrichtung bezüglich einer Teiglingtransportumfangsrichtung vor einer Einlegeeinrichtung für Teiglinge in die Wirkkammern angeordnet, kann baulich besonders einfach gewährleistet werden, dass Trennmittel in die Wirkkammern eingebracht werden, bevor die Teiglinge in die Wirkkammern eingelegt werden.

Eine vorteilhafte Ausführungsvariante sieht vor, dass die Zuführeinrichtung einen Vibrationsportionierer für das Trennmittel aufweist. Mittels eines solchen Vibrationsportionierers kann baulich besonders einfach batchweise und/oder diskontinuierlich Trennmittel beispielsweise auf den umlaufenden Trennmittelzuführtrum der Mittel zum Einwerfen von Trennmitteln aufgebracht werden.

Alternativ zu dem Vibrationsportionierer sieht eine weitere vorteilhafte Ausführungsvariante vor, dass die berührungslose Zuführeinrichtung einen Bürstenportionierer für das Trennmittel aufweist. Auch mittels eines Bürstenportionierers kann das Trennmittel betriebssicher batchweise und/oder diskontinuierlich beispielsweise auf den umlaufenden Trennmittelzuführtrum der Mittel zum Einwerfen der Trennmittel aufgebracht werden.

Es versteht sich, dass zum Aufbringen von Trennmitteln auch andere Einrichtungen geeignet sein können, wenn sie batchweise und/oder diskontinuierlich arbeiten können.

Die Erfindung wird im Folgenden anhand von Ausführungsbeispielen weiter erläutert. Dabei wird auch auf die Zeichnung Bezug genommen, in deren
- FIG 1: eine Ansicht einer Vorrichtung zum Wirken von Teiglingen mit einer integrierten Teigteileinrichtung,
- FIG 2: eine Detailansicht der Wirkvorrichtung aus der FIG 1 mit einer berührungslosen Zuführeinrichtung für Trennmittel mit einem Vibrationsportionierer für die Trennmittel, und
- FIG 3: eine weitere Detailansicht der Wirkvorrichtung aus der FIG 1 mit einer alternativen berührungslosen Zuführeinrichtung für Trennmittel mit einem Bürstenportionierer für die Trennmittel
jeweils schematisch dargestellt ist.

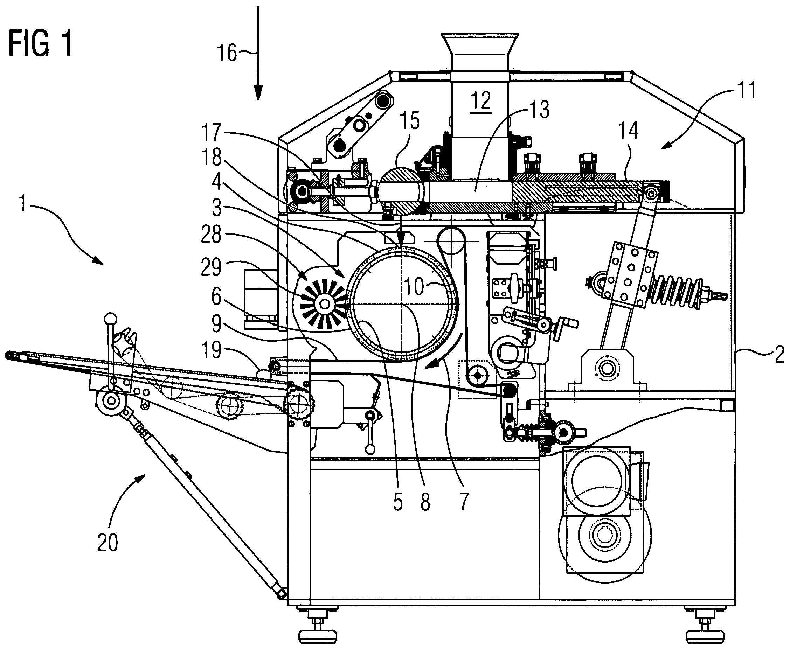

Die in der FIG 1 gezeigte Wirkvorrichtung 1 weist ein Gehäuse 2 auf, in welchem eine Wirkkammertrommel 3 mit radial zugänglichen Wirkkammern 4 (hier nur exemplarisch beziffert) angeordnet ist.

Zum Bilden der radial zugänglichen Wirkkammern 4 umfasst die Wirkkammertrommel 3 zum einen eine innere Wirktrommel 5 und zum anderen eine äußere Wirktrommel 6, wobei die äußere Wirktrommel 6 im Uhrzeigersinn 7 und die innere Wirktrommel 5 ebenfalls im Uhrzeigersinn 7 um eine Wirkkammertrommelrotationsachse 8 rotieren können. Die innere Wirkkammertrommel 5 kann zusätzlich hinsichtlich der Wirkkammertrommelrotationsachse 8 noch radial und axial oszillieren.

Um die radial zugänglichen Wirkkammern 4 an der äußeren Wirktrommel 6 radial verschließen zu können, wird die Wirkkammertrommel 3 zumindest teilweise von einem Wirkband 9 umschlungen.

Damit an der Wirkvorrichtung 1 Teiglinge 10 (hier nur exemplarisch beziffert) in den radial zugänglichen Wirkkammern 4 bereitgestellt werden können, ist oberhalb der Wirkkammertrommel 3 eine Teigportioniereinrichtung 11 angeordnet, die eine Teigzuführeinrichtung 12 zum Bevorraten einer Teigmasse aufweist. Unterhalb der Teigzuführeinrichtung 12 sind eine Teigteilkammer 13, ein Teigschieber 14 und eine Teigteilwelle 15 angeordnet. Insbesondere mittels der Teigteilwelle 15 können die Teiglinge 10 von der Teigmasse abgetrennt und portioniert werden. Die jeweils abgetrennten Teiglinge 10 können mit Hilfe der Schwerkraft 16 gemäß Fallrichtung 17 über Wirkkammerzugangsöffnungen 18 (hier nur exemplarisch beziffert) in die jeweilige radial zugängliche Wirkkammer 4 gelangen.

Sind die Teiglinge 10 mittels der Wirkkammertrommel beziehungsweise mittels der radial zugänglichen Wirkkammern entsprechend gewirkt beziehungsweise gewalkt, können sie über das Wirkband 9 als fertig gewirkte Teiglinge 19 an einer Ausgabeeinrichtung 20 der Wirkvorrichtung 1 bereitgestellt werden. Während des Wirkvorgangs werden die Teiglinge 10 im Urzeigersinn 7 mittels der radial zugänglichen Wirkkammern 4 im Sinne einer Teiglingtransportumfangsrichtung um die Wirkkammertrommelrotationsachse 8 bewegt bzw. transportiert.

Damit die Teiglinge 10 zuvor an der Wirkkammertrommel 3 beziehungsweise in den radial zugänglichen Wirkkammern 4 oder an dem Wirkband 9 nicht nachteilig anhaften können, ist es erforderlich, dass den Teiglingen 10 ein Trennmittel 21 zugegeben wird, mittels welchem das Anhaftvermögen der Teiglinge 10 hinreichend verringert werden kann. In diesem Ausführungsbeispiel wird als Trennmittel 21 Mehl eingesetzt, da dieses Lebensmittel unbedenklich den Teiglingen 10 zugegeben werden kann.

Um das Trennmittel 21 vorteilhaft der Wirkkammertrommel 3 zuführen zu können, kann die Wirkvorrichtung 1 gemäß der Darstellungen nach den FI-Gen 2 und 3 jeweils mit einer Batch-Zuführeinrichtung 22 ausgestattet werden, mittels welcher die Trennmittel 21 an der Wirkkammertrommel 3 zum batchweise bereitgestellt werden können. Die alternativ ausgestatteten Batch-Zuführeinrichtungen 22 sind in der Schnittdarstellung nach der FIG 1 der Übersichtigkeit halber noch nicht eingezeichnet, werden aber nachstehend ausführlich erläutert.

Die Batch-Zuführeinrichtung 22 ist bei diesem Ausführungsbeispiel berührungslos vor der Wirkkammertrommel 3 angeordnet und verfügt als Mittel 23 zum Einwerfen des Trennmittels 21 in die radial zugänglichen Wirkkammern 4 über einen umlaufenden Trennmittelzuführtrum 24. Dadurch, dass der Trennmittelzuführtrum 24 an seinem der Wirkkammertrommel 3 zugewandten Ende 25 um ca. 180° besonders scharf umgelenkt wird, kann das Trennmittel 21 baulich besonders einfach als Trennmittelanhäufungen 21A batchweise in die radial zugänglichen Wirkkammern 4 eingeworfen werden, sobald die Wirkkammern 4 das der Wirkkammertrommel 3 zugewandte Ende 25 im Uhrzeigersinn 7 passieren. Durch dieses gezielte batchweise Einwerfen des Trennmittels 21 bzw. der Trennmittelanhäufungen 21A in die jeweilige radial zugängige Wirkkammer 4 kann die Gefahr verringert werden, dass die Wirkkammertrommel 3 in hiervon verschiedenen Bereichen unnötig mit Trennmittel 21 kontaminiert wird.

Darüber hinaus kann durch das vorliegende batchweise und zudem diskontinuierliche Zuführen des Trennmittels 21 als Trennmittelanhäufungen 21A ein nicht unerhebliche Menge an Trennmittel 21 eingespart werden.

Vorteilhafter Weise ist die Batch-Zuführeinrichtung 22 einerseits vor der Teigteilwelle 15, welche in diesem Ausführungsbeispiel als eine Einlegeinrichtung für die Teiglinge 10 angesehen werden kann, sowie andererseits auch vor einem Wirkbandbereich der Wirkkammertrommel 3 angeordnet, so dass immer gewährleistet ist, dass die radial zugänglichen Wirkkammern 4 bereits mit Trennmittel 21 versehen sind, bevor in diese ein Teigling 10 eingelegt wird beziehungsweise bevor ein Teigling 10 mit dem Wirkband 9 in Berührung treten kann. Hierdurch kann ein kritisches Anhaften des Teiglings 10 an umliegende Bauteile besonders sicher verhindert werden.

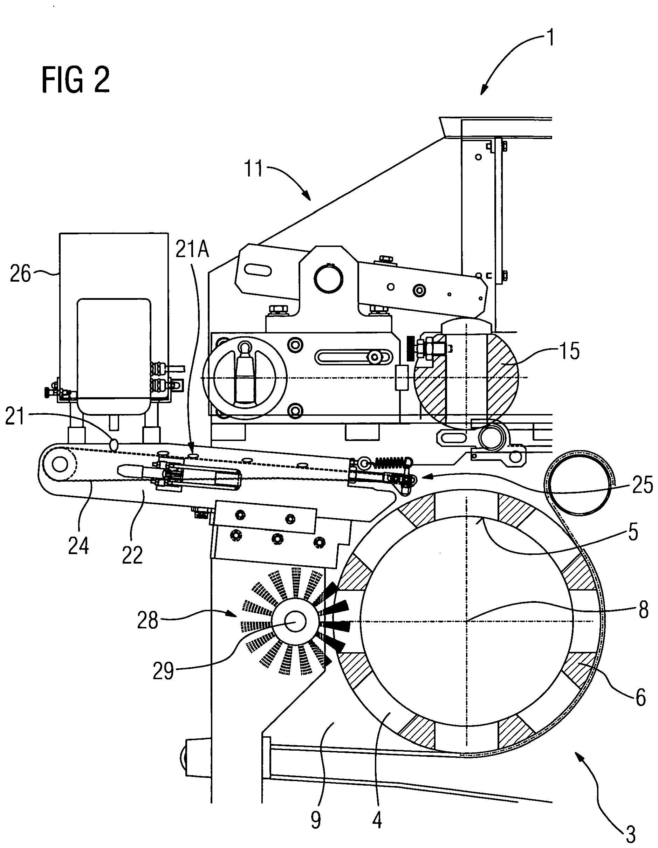

Um das Trennmittel 21 batchweise als Trennmittelanhäufungen 21A vorteilhaft auf dem umlaufenden Zuführtrum 24 anhäufen zu können, weist die Wirkvorrichtung 1 nach der Darstellung der FIG 2 einen Vibrationsportionierer 26 auf.

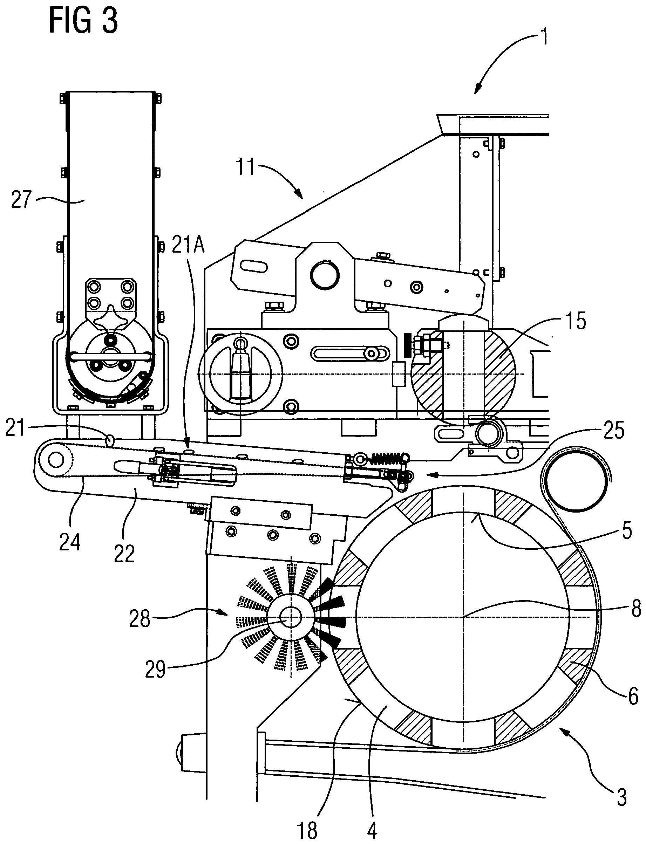

Alternativ zu dem Vibrationsportionierer 26 kann die berührungslose Zuführeinrichtung 22 alternativ auch einen Bürstenportionierer 27 umfassen, wie in der Darstellung nach der FIG 3 an der Wirkvorrichtung 1 angeordnet ist.

In beiden Fällen kann das Trennmittel 21 vorteilhaft dosiert und batchweise auf dem umlaufenden Zuführtrum 24 angehäuft werden, wobei die batchweise angehäuften Trennmittelanhäufungen 21A dann mittels des umlaufenden Zuführtrums 24 zum richtigen Zeitpunkt batchweise und diskontinuierlich an der Wirkkammertrommel 3 bereit gestellt werden können.

Damit nach dem Wirken der Teiglinge 10 innerhalb der radial zugänglichen Wirkkammern 4 an der Wirkkammertrommel 3 zurückgebliebene Trennmittel 21 vor einem erneuten Umlauf der Wirkkammertrommel 3 gereinigt werden können, ist unterhalb der berührungslosen Zuführeinrichtung 22 eine Reinigungseinrichtung 28 mit einer umlaufenden Bürste 29 vorgesehen, mittels welcher die radial zugänglichen Wirkkammern 4 zumindest teilweise ausgebürstet werden können.

### Bezugszeichenliste

- 1: Wirkvorrichtung
- 2: Gehäuse
- 3: Wirkkammertrommel
- 4: radial zugängliche Wirkkammern
- 5: innere Wirktrommel
- 6: äußere Wirktrommel
- 7: Uhrzeigersinn
- 8: Wirkkammertrommelrotationsachse
- 9: Wirkband
- 10: Teiglinge
- 11: Teigportioniereinrichtung
- 12: Teigzuführeinrichtung
- 13: Teigteilkammer
- 14: Teigschieber
- 15: Teigteilwelle
- 16: Schwerkraft
- 17: Fallrichtung
- 18: Wirkkammerzugangsöffnung
- 19: fertig gewirkte Teiglinge
- 20: Ausgabeeinrichtung
- 21: Trennmittel
- 21A: Trennmittelanhäufungen
- 22: berührungslose Zuführeinrichtung
- 23: Mittel zum Einwerfen von Trennmitteln
- 24: umlaufender Zuführtrum
- 25: zugewandtes Ende
- 26: Vibrationsportionierer
- 27: Bürstenportionierer
- 28: Reinigungseinrichtung
- 29: umlaufenden Bürste

## Patentansprüche

1. Vorrichtung (1) zum Wirken von Teiglingen (10) mit einer Wirkkammertrommel (3) umfassend radial zugängliche Wirkkammern (4), in welchen die Teiglinge (10) gewirkt werden können, mit einem Wirkband (9) zum radialen Verschließen der Wirkkammern (4) und mit einer Einrichtung zum Zuführen von Mehl als Trennmittel (21), mittels welchem ein kritisches Anhaften der Teiglinge (10) verhindert werden kann,
**gekennzeichnet durch**
eine Batch-Zuführeinrichtung (22) für das Trennmittel (21), umfassend eine berührungslose Zuführeinrichtung (22) für das Trennmittel (21), wobei die berührungslose Zuführeinrichtung (22) so gestaltet ist, dass sie die Wirkkammertrommel (3) zum Zuführen des Trennmittels (21) konstruktiv nicht berühren muss, wobei die Zuführeinrichtung (22) Mittel (23) zum Einwerfen des Trennmittels (21) in die Wirkkammern (4) aufweist.

2. Wirkvorrichtung (1) nach Anspruch 1,
**dadurch gekennzeichnet, dass**
die Mittel (23) zum Einwerfen des Trennmittels (21) einen umlaufenden Trennmittelzuführtrum (24) aufweisen.

3. Wirkvorrichtung (1) nach einem der Ansprüche 1 oder 2,
**dadurch gekennzeichnet, dass**
die Zuführeinrichtung (22) bezüglich einer Teiglingtransportumfangsrichtung (7) vor einem Wirkbandbereich der Wirkkammertrommel (4) angeordnet ist.

4. Wirkvorrichtung (1) nach einem der Ansprüche 1 bis 3,
**dadurch gekennzeichnet, dass**
die Zuführeinrichtung (22) bezüglich einer Teiglingtransportumfangsrichtung (7) vor einer Einlegeeinrichtung (15) für Teiglinge (10) in die Wirkkammern (4) angeordnet ist.

5. Wirkvorrichtung (1) nach einem der Ansprüche 1 bis 4,
**dadurch gekennzeichnet, dass**
die Zuführeinrichtung (22) einen Vibrationsportionierer (26) für das Trennmittel (21) aufweist.

6. Wirkvorrichtung (1) nach einem der Ansprüche 1 bis 5,
**dadurch gekennzeichnet, dass**
die Zuführeinrichtung (22) einen Bürstenportionierer (27) für das Trennmittel (21) aufweist.

7. Wirkverfahren von Teiglingen (10), bei welchem ein Teigling (10) in eine Wirkkammer (4) einer Wirkkammertrommel (3) eingelegt wird, und bei welchem mittels Mehl als Trennmittel (21) eine Anhaftgefahr des Teiglings (10) verringert werden kann,
**dadurch gekennzeichnet, dass**
das Trennmittel (21) der Wirkkammertrommel (3) durch eine berührungslose Zuführeinrichtung (22) für das Trennmittel (21) mit Mitteln (23) zum Einwerfen des Trennmittels (21) in die Wirkkammern (4) diskontinuierlich zugeführt wird, wobei die berührungslose Zuführeinrichtung (22) so gestaltet ist, dass sie die Wirkkammertrommel (3) zum Zuführen des Trennmittels (21) konstruktiv nicht berühren muss.

8. Wirkverfahren nach Anspruch 7,
**dadurch gekennzeichnet, dass**
vor einem Einlegen und/oder während eines Einlegens des Teiglings (10) einer Wirkkammer (4) das Trennmittel (21) zugeführt wird.

9. Wirkverfahren nach Anspruch 7 oder 8,
**dadurch gekennzeichnet, dass**
das Trennmittel (21) in eine leere Wirkkammer (4) eingebracht wird.

10. Wirkverfahren nach einem der Ansprüche 7 bis 9,
**dadurch gekennzeichnet, dass**
das Trennmittel (21) in die Wirkkammer (4) eingebracht wird, nachdem die Wirkkammer (4) den unteren Scheitelbereich der Wirkkammertrommel (3) passiert hat und bevor die Wirkkammer (4) den oberen Scheitelbereich der Wirkkammertrommel (3) erreicht.

11. Wirkverfahren nach einem der Ansprüche 7 bis 10,
**dadurch gekennzeichnet, dass**
der Teigling (10) mittels der Wirkkammertrommel (3) mit dem Trennmittel (21) beaufschlagt wird.

## Claims

1. Apparatus (1) for working dough pieces (10), having a working chamber drum (3) comprising radially accessible working chambers (4) in which the dough pieces (10) can be worked, having a working belt (9) for radially closing the working chambers (4), and having a device for feeding flour as release agent (21), by means of which critical sticking of the dough pieces (10) can be prevented,
**characterized by**
a batch feeding device (22) for the release agent (21), comprising a contactless feeding device (22) for the release agent (21), wherein the contactless feeding device (22) is designed such that it does not have to come into structural contact with the working chamber drum (3) in order to feed the release agent (21), wherein the feeding device (22) has means (23) for throwing the release agent (21) into the working chambers (4).

2. Working apparatus (1) according to Claim 1,
**characterized in that**
the means (23) for throwing the release agent (21) in have a circulating release-agent feeding strand (24).

3. Working apparatus (1) according to either of Claims 1 and 2,
**characterized in that**
the feeding device (22) is arranged upstream of a working belt region of the working chamber drum (4) with regard to a dough-piece transport circumferential direction (7).

4. Working apparatus (1) according to one of Claims 1 to 3,
**characterized in that**
the feeding device (22) is arranged upstream of an insertion device (15) for inserting dough pieces (10) into the working chambers (4) with regard to a dough-piece transport circumferential direction (7).

5. Working apparatus (1) according to one of Claims 1 to 4,
**characterized in that**
the feeding device (22) has a vibrating portioner (26) for the release agent (21).

6. Working apparatus (1) according to one of Claims 1 to 5,
**characterized in that**
the feeding device (22) has a brush portioner (27) for the release agent (21).

7. Method for working dough pieces (10), in which a dough piece (10) is inserted into a working chamber (4) of a working chamber drum (3), and in which a risk of the dough piece (10) sticking can be reduced by means of flour as release agent (21),
**characterized in that**
the release agent (21) is fed discontinuously to the working chamber drum (3) by a contactless feeding device (22) for the release agent (21) having means (23) for throwing the release agent (21) into the working chambers (4), wherein the contactless feeding device (22) is designed such that it does not have to come into structural contact with the working chamber drum (3) in order to feed the release agent (21).

8. Working method according to Claim 7,
**characterized in that**
before and/or during insertion of the dough piece (10), the release agent (21) is fed to a working chamber (4).

9. Working method according to Claim 7 or 8,
**characterized in that**
the release agent (21) is introduced into an empty working chamber (4).

10. Working method according to one of Claims 7 to 9,
**characterized in that**
the release agent (21) is introduced into the working chamber (4) after the working chamber (4) has passed the bottom vertex region of the working chamber drum (3) and before the working chamber (4) reaches the top vertex region of the working chamber drum (3).

11. Working method according to one of Claims 7 to 10,
**characterized in that**
the dough piece (10) has the release agent (21) applied to it by means of the working chamber drum (3).

## Revendications

1. Dispositif (1) pour le pétrissage de portions de pâte (10) avec un tambour de caisson de pétrissage (3) comprenant des caissons de pétrissage (4) accessibles dans le plan radial dans lesquels les portions de pâte (10) peuvent être pétries, avec une bande de pétrissage (9) pour fermer dans le plan radial les caissons de pétrissage (4) et avec un dispositif d'alimentation en farine servant d'antiagglomérant (21) et à l'aide duquel une adhérence critique des portions de pâte (10) peut être empêchée;
**caractérisé par**:
n dispositif d'amenée par lots (22) pour l'antiagglomérant (21), comprenant un dispositif d'amenée sans contact (22) pour l'antiagglomérant (21), le dispositif d'amenée sans contact (22) étant agencé de telle sorte qu'il ne doive pas entrer en contact sur le plan constructif avec le tambour de caisson de pétrissage (3) pour amener l'antiagglomérant (21), le dispositif d'amenée (22) comportant des moyens (23) pour introduire l'antiagglomérant (21) dans les caissons de pétrissage (4).

2. Dispositif de pétrissage (1) selon la revendication 1, **caractérisé en ce que** les moyens (23) d'introduction de l'antiagglomérant (21) comportent une galerie d'amenée d'antiagglomérant (24) périphérique.

3. Dispositif de pétrissage (1) selon l'une quelconque des revendications 1 ou 2, **caractérisé en ce que** le dispositif d'amenée (22) est disposé devant une région de bande de pétrissage du tambour de caisson de pétrissage (4) par rapport à une direction périphérique de transport de portion de pâte (7).

4. Dispositif de pétrissage (1) selon l'une quelconque des revendications 1 à 3, **caractérisé en ce que** le dispositif d'amenée (22) est disposé par rapport à une direction périphérique de transport de portion de pâte (7) devant un dispositif de placement (15) pour les portions de pâte (10) dans les caissons de pétrissage (4).

5. Dispositif de pétrissage (1) selon l'une quelconque des revendications 1 à 4, **caractérisé en ce que** le dispositif d'amenée (22) comporte un séparateur de portions par vibrations (26) pour l'antiagglomérant (21).

6. Dispositif de pétrissage (1) selon l'une quelconque des revendications 1 à 5, **caractérisé en ce que** le dispositif d'amenée (22) comporte un séparateur de portions à brosses (27) pour l'antiagglomérant (21).

7. Procédé de pétrissage de portions de pâte (10) dans lequel une portion de pâte (10) est placée dans un caisson de pétrissage (4) d'un tambour de caisson de pétrissage (3) et dans lequel un risque d'adhérence de la portion de pâte (10) peut être réduit à l'aide de la farine servant d'antiagglomérant (21), **caractérisé en ce que** l'antiagglomérant (21) du tambour de caisson de pétrissage (3) est amené de façon discontinue dans les caissons de pétrissage (4) par un dispositif d'amenée sans contact (22) prévu pour l'antiagglomérant (21) à l'aide de moyens (23) d'introduction de l'antiagglomérant (21), le dispositif d'amenée sans contact (22) étant agencé de telle sorte qu'il ne doive pas entrer en contact sur le plan de construction avec le tambour de caisson de pétrissage (3) pour amener l'antiagglomérant (21).

8. Procédé de pétrissage selon la revendication 7, **caractérisé en ce que** l'antiagglomérant (21) est amené avant le placement et/ou pendant le placement de la portion de pâte (10) dans un caisson de pétrissage (4).

9. Procédé de pétrissage selon la revendication 7 ou 8, **caractérisé en ce que** l'antiagglomérant (21) est amené dans un caisson de pétrissage (4) vide.

10. Procédé de pétrissage selon l'une quelconque des revendications 7 à 9, **caractérisé en ce que** l'antiagglomérant (21) est amené dans le caisson de pétrissage (4) après que le caisson de pétrissage (4) a passé la zone de crête inférieure du tambour de caisson de pétrissage (3) et avant que le caisson de pétrissage (4) ait atteint la zone de crête supérieure du tambour de caisson de pétrissage (3).

11. Procédé de pétrissage selon l'une quelconque des revendications 7 à 10, **caractérisé en ce que** la portion de pâte (10) est alimentée en antiagglomérant (21) à l'aide du tambour de caisson de pétrissage (3).
